Europäisches Patentamt

European Patent Office

Office européen des brevets

(19)

(11) **EP 1 340 195 B1**

(12) **FASCICULE DE BREVET EUROPEEN**

(45) Date de publication et mention
de la délivrance du brevet:
**27.10.2004 Bulletin 2004/44**

(21) Numéro de dépôt: **01997782.6**

(22) Date de dépôt: **21.11.2001**

(51) Int Cl.⁷: $G06T\ 9/00$, $G06T\ 17/20$

(86) Numéro de dépôt international:
**PCT/FR2001/003675**

(87) Numéro de publication internationale:
**WO 2002/043005 (30.05.2002 Gazette 2002/22)**

(54) **PROCEDE DE CODAGE PAR ONDELETTES D'UN MAILLAGE**

MESH-CODIERUNGSVERFAHREN AUF WAVELET-BASIS

WAVELET-BASED MESH CODING METHOD

(84) Etats contractants désignés:
**AT BE CH CY DE DK ES FI FR GB GR IE IT LI LU
MC NL PT SE TR**

(30) Priorité: **21.11.2000 FR 0015043**

(43) Date de publication de la demande:
**03.09.2003 Bulletin 2003/36**

(73) Titulaire: **FRANCE TELECOM
75015 Paris (FR)**

(72) Inventeur: **GIOIA, Patrick
F-35510 Cesson-Sevigne (FR)**

(74) Mandataire: **Vidon, Patrice
Cabinet Vidon
16 B, rue Jouanet - B.P. 90333
35703 Rennes Cedex 7 (FR)**

(56) Documents cités:
EP-A- 0 784 295    FR-A- 2 781 908
US-A- 5 107 444    US-A- 6 144 773

• HINKER P ET AL: "GEOMETRIC OPTIMIZATION"
PROCEEDINGS OF THE CONFERENCE ON
VISUALIZATION. SAN JOSE, OCT. 25 - 29, 1993,
NEW YORK, IEEE, US, 25 octobre 1993
(1993-10-25), pages 189-195,CP-18,
XP000475427 ISBN: 0-8186-3942-3
• GROSS M H ET AL: "EFFICIENT TRIANGULAR
SURFACE APPROXIMATIONS USING
WAVELETS AND QUADTREE DATA
STRUCTURES" IEEE TRANSACTIONS ON
VISUALIZATION AND COMPUTER GRAPHICS,
IEEE SERVICE CENTER, PISCATAWAY, NJ, US,
vol. 2, no. 2, 1 juin 1996 (1996-06-01), pages
130-143, XP000637707 ISSN: 1077-2626
• ECK M ET AL: "MULTIRESOLUTION ANALYSIS
OF ARBITRARY MESHES" COMPUTER
GRAPHICS PROCEEDINGS. LOS ANGELES,
AUG. 6 - 11, 1995, COMPUTER GRAPHICS
PROCEEDINGS (SIGGRAPH), NEW YORK, IEEE,
US, 6 août 1995 (1995-08-06), pages 173-182,
XP000546226 ISBN: 0-89791-701-4
• HOPPE H: "PROGRESSIVE MESHES"
COMPUTER GRAPHICS PROCEEDINGS 1996
(SIGGRAPH). NEW ORLEANS, AUG. 4 - 9, 1996,
COMPUTER GRAPHICS PROCEEDINGS
(SIGGRAPH), NEW YORK, NY: ACM, US, 4 août
1996 (1996-08-04), pages 99-108, XP000682726

## Description

Le domaine de l'invention est celui du codage d'images ou d'éléments d'images. Plus précisément, l'invention concerne la représentation et le codage adaptatifs de scènes (ou d'objets de scène) en trois dimensions (3D) représentées par des maillages.

L'invention trouve des applications dans tous les domaines où il est souhaitable de réduire le nombre d'informations nécessaires pour représenter efficacement une image numérique, pour la stocker et/ou la transmettre. Par exemple, l'invention peut être utilisée pour la transmission d'images via le réseau Internet. Dans ce cadre, elle permet l'animation de scènes 3D avec une visualisation en temps réel, bien que le débit ne soit pas constant ni garanti. L'invention peut, dans ce cas, être une primitive d'un langage de transmission de données tel que VRML (en anglais "Virtual Reality Modeling Language").

Parmi les autres applications envisageables, on peut citer le stockage de données animées sur CD-ROM (ou support de données équivalent), les applications multi-utilisateurs, la télévision numérique, ...

L'invention propose une amélioration aux méthodes dites « à ondelettes », qui permettent de représenter un maillage comme une succession de détails ajoutés à un maillage de base. La théorie générale de cette technique est notamment décrite dans l'article de M. Lounsbery, T. DeRose et J. Warren, « Multiresolution Analysis for Surfaces of Arbitrary Topological Type » (ACM Transaction on Graphics, Vol. 16, No. 1, pp. 34-73).

Selon cette technique, un maillage est donc représenté par une suite de coefficients qui correspondent aux coordonnées dans une base d'ondelettes d'une paramétrisation dudit maillage par un polyèdre simple. Les principes mathématiques correspondants sont rappelés en annexe (cette annexe fait partie de la présente description).

En pratique, lors de la reconstruction, le maillage de base $M_0$ est représenté sous une forme arborescente : chacune de ses faces est la racine d'un arbre dont les fils de chaque noeud sont les quatre faces obtenues après subdivision canonique. Les coefficients d'ondelettes sont indexés par leurs coordonnées barycentriques sur une face de $M_0$.

Une méthode de visualisation comprenant des structures de données et des algorithmes permettant la reconstruction progressive de maillages représentés par des ondelettes a été proposée par A. Certain, J. Popovic, T. DeRose, D. Salesin et W. Stuetzle dans l'article «Interactive Multiresolution Surface Viewing » (Computer Graphics Proceedings 1996).

Cette méthode est généralement considérée comme la méthode de référence dans le domaine de la visualisation de surfaces représentées par ondelettes.

Cette technique consiste à prendre en compte des paquets de coefficients d'ondelettes et à raffiner le maillage régulièrement en fonction de ces coefficients.

Bien qu'efficace pour la reconstruction progressive de maillages, cette méthode a pour inconvénient de ne pas permettre une visualisation adaptative de scènes ou d'objets tridimensionnels.

En effet, un inconvénient de cette technique de l'art antérieur est qu'elle induit, par subdivision, la création de facettes inutiles, ce qui entraîne une augmentation inutile du nombre de données nécessaires à la description du maillage.

Une telle technique est donc trop lourde en termes de données à transmettre pour permettre une visualisation adaptative de scènes ou d'objets 3D, notamment lorsque les objets sont animés, que la puissance du terminal de visualisation est faible et/ou que le débit de transmission est variable et/ou limité.

L'invention a notamment pour objectif de pallier ces inconvénients de l'art antérieur.

Plus précisément, un objectif de l'invention est de mettre en oeuvre une technique de codage de maillages représentatifs d'objets ou de scènes 3D, permettant une reconstruction adaptative d'un maillage au sein d'un terminal de visualisation.

Notamment, un objectif de l'invention est de fournir un tel procédé de codage permettant une visualisation adaptative d'un objet ou d'une scène 3D en fonction de paramètres, tels que par exemple le point de vue d'un observateur.

Un autre objectif de l'invention est de fournir un tel procédé de codage permettant à un utilisateur de naviguer au sein d'une scène 3D rafraîchie à un taux sensiblement constant, indépendamment des paramètres de la navigation ou de la taille du maillage associé.

L'invention a également pour objectif, bien sûr, de fournir une technique de reconstruction et de transmission à travers un réseau de communication d'un objet codé selon ce procédé de codage.

Ces objectifs, ainsi que d'autres qui apparaîtront par la suite, sont atteints à l'aide des procédés définis dans les revendications 1 et 2 ci-jointes.

Ainsi, l'invention repose sur une approche tout à fait nouvelle et inventive du codage de maillages "à ondelettes" représentatifs d'objets ou de scènes 3D. En effet, l'invention repose notamment sur la suppression des coefficients d'ondelettes associés à des détails d'une scène ou d'un objet 3D qui ne sont pas essentiels à la visualisation d'une telle scène ou d'un tel objet par un observateur.

Un tel procédé de codage permet notamment de supprimer des coefficients d'ondelettes, ainsi que leur influence sur la représentation de la scène 3D considérée, en un temps sensiblement égal au temps nécessaire pour les ajouter. De cette façon, une telle technique de codage permet à tout moment d'ajouter des coefficients qui sont devenus essentiels et de supprimer des coefficients dont l'influence peut être considérée comme négligeable, de façon homogène, c'est-à-dire sans que le taux de rafraîchissement d'une représentation de la scène 3D dépende des paramètres de la navigation au sein de cette scène ou de la taille du maillage reconstruit.

Selon une première variante de l'invention, un coefficient d'ondelette vérifie un critère de non-essentialité s'il est associé à une facette dudit maillage simple ($M_0$) n'appartenant pas à la partie visible dudit maillage source (M).

L'invention permet ainsi de supprimer les coefficients d'ondelettes qui ne sont pas visuellement pertinents pour la représentation de la scène ou de l'objet 3D considéré.

Selon une deuxième variante de l'invention, un coefficient d'ondelette vérifie un critère de non-essentialité si l'amplitude dudit coefficient est inférieure à un seuil, déterminé en fonction de la distance d'un observateur à un sommet indexant ledit coefficient.

L'invention permet donc également de supprimer l'effet de coefficients d'ondelettes dont l'amplitude peut être considérée comme négligeable, pour la visualisation de la scène ou de l'objet 3D considéré.

Préférentiellement, un tel procédé de codage comprend une étape de calcul dudit seuil, tenant compte de ladite distance et d'un indicateur de capacité d'un terminal de visualisation dudit objet ou de ladite scène en trois dimensions.

L'invention permet donc une suppression de l'effet de certains coefficients d'ondelettes, adaptée à la capacité du terminal de visualisation de la scène ou de l'objet 3D considéré. Ainsi, lorsque le terminal de visualisation présente une capacité de traitement importante, le seuil est peu élevé, de manière à conserver un plus grand nombre de coefficients d'ondelettes au cours du codage du maillage. Inversement, en présence d'un terminal de visualisation de capacité faible, l'étape de calcul du seuil conduit à un résultat élevé, de sorte que l'effet d'un plus grand nombre de coefficients d'ondelettes est supprimé au cours de l'étape de suppression.

Selon une première variante de réalisation, ledit indicateur de capacité est une constante dépendant de la capacité de traitement dudit terminal.

La valeur d'une telle constante est par exemple fixée en fonction du type de processeur dont est équipé le terminal de visualisation.

Selon une deuxième variante de réalisation, ledit indicateur de capacité varie en cours de visualisation dudit objet ou de ladite scène en trois dimensions, en fonction de la capacité de traitement courànte dudit terminal.

La valeur d'un tel indicateur de capacité peut ainsi être adaptée en fonction du nombre d'images par seconde que l'on souhaite pouvoir visualiser sur le terminal, et varie, par exemple, en fonction des ressources utilisées par d'autres applications traitées par le terminal à un instant donné.

Avantageusement, un tel procédé de codage comprend une étape d'aplatissement du maillage par ajout à ladite fonction de paramétrisation de l'opposé dudit ou desdits coefficients d'ondelette (d ; d1, ..., dn) à supprimer.

Ainsi, l'influence d'un coefficient non essentiel est annulée par l'ajout de l'opposé de ce coefficient.

Selon une caractéristique avantageuse de l'invention, ledit maillage partiel (M') correspond à un ensemble d'arbres, chacun desdits arbres représentant une face dudit maillage simple ($M_0$) et comprenant un ensemble de noeuds représentant chacun une face d'un maillage affiné ($M_j$) de la face considérée dudit maillage simple ($M_0$).

Préférentiellement, un tel procédé de codage comprend une étape de retrait d'au moins un coefficient d'ondelette (d ; d1, ..., dn) à supprimer, comprenant les étapes suivantes :

- prise en compte de l'opposé dudit ou desdits coefficients d'ondelette (d ; d1, ..., dn) ;
- prise en compte des modifications induites par l'étape précédente ;
- suppression des parties des arbres définissant (M') et influencées uniquement par ledit ou lesdits coefficients d'ondelette (d ; d1, ..., dn).

Ainsi, une telle étape consiste à ajouter l'opposé du coefficient d'ondelette devenu inutile, à prendre en compte les modifications géométriques induites sur le maillage par une telle suppression du coefficient d'ondelette, et à élaguer l'arbre représentant le maillage sous forme hiérarchique.

De façon avantageuse, un tel procédé de codage met en oeuvre un jeu de pointeurs pointant respectivement sur tous les sommets dudit maillage partiel, de façon à atteindre directement un sommet indexant un coefficient d'ondelette à supprimer.

De manière préférentielle, lesdits pointeurs sont regroupés dans un tableau d'entiers (VPC).

Ainsi, l'ajout de l'opposé d'un coefficient d'ondelette à supprimer ne se fait pas comme l'ajout d'un coefficient d'ondelette régulier, mais en introduisant une structure supplémentaire (VPC), qui est un tableau dont le $i^{\text{ème}}$ élément est l'indice du sommet indexé par le $i^{\text{ème}}$ coefficient, si un tel sommet existe.

Selon une technique avantageuse de l'invention, ladite étape de prise en compte des modifications met en oeuvre un algorithme récursif d'élagage.

L'invention concerne encore une structure de signal définie dans la revendication 12, et des dispositifs définis dans les revendications 13 et 14 ci-jointes.

Selon une première variante d'un tel dispositif de codage, un coefficient d'ondelette vérifie un critère de non-essentialité s'il est associé à une facette dudit maillage simple ($M_0$) n'appartenant pas à la partie visible dudit maillage source (M).

Selon une deuxième variante d'un tel dispositif de codage, un coefficient d'ondelette vérifie un critère de non-essentialité si l'amplitude dudit coefficient est inférieure à un seuil, déterminé en fonction de la distance d'un observateur à un sommet indexant ledit coefficient.

Préférentiellement, un tel dispositif de codage comprend des moyens de calcul dudit seuil, mettant en oeuvre le produit de ladite distance par un indicateur de capacité d'un terminal de visualisation dudit objet ou de ladite scène en trois dimensions.

Avantageusement, un tel dispositif de codage coopère avec des moyens de tri desdits coefficients d'ondelettes en fonction, d'une part, d'une facette dudit maillage simple à laquelle est associé chaque coefficient d'ondelette, et, d'autre part, de l'amplitude desdits coefficients d'ondelettes.

Ainsi, le dispositif de codage peut accéder au résultat d'un tri efficace des coefficients d'ondelettes, grâce à une organisation des données par ordre croissant d'identification des facettes du maillage source, et, pour chacune de ces facettes, par un tri en amplitude des coefficients d'ondelettes indexés par des sommets de cette facette. De tels moyens de tri peuvent être internes ou externes au dispositif de codage.

Lorsque le dispositif de codage a déterminé qu'une face du maillage source appartient à la pyramide de vue d'un observateur, il lui suffit donc de parcourir la liste des coefficients d'ondelettes de la face correspondante, résultant du tri décrit précédemment, et d'arrêter sa recherche lorsque le coefficient rencontré dans la liste est d'amplitude inférieure à un seuil déterminé.

Selon une première variante avantageuse de l'invention, un tel dispositif de codage coopère avec des moyens de transmission de données vers au moins un terminal distant.

Selon une deuxième variante avantageuse de l'invention, un tel dispositif de codage est intégré à un terminal permettant la visualisation dudit objet ou de ladite scène.

L'invention concerne également un dispositif de décodage d'un maillage source (M) représentatif d'un objet ou d'une scène en trois dimensions, comprenant des moyens de réception d'un signal ayant une structure telle que décrite précédemment, et des moyens de reconstruction d'une représentation dudit objet ou de ladite scène à partir dudit signal reçu.

Avantageusement, un tel dispositif de décodage comprend des moyens de transmission d'au moins une information de position vers un serveur et/ou un dispositif de codage distant.

Préférentiellement, ladite ou lesdites informations de position appartiennent au groupe comprenant :

- une position d'un observateur dudit objet ou de ladite scène en trois dimensions ;
- une direction de vue d'un observateur dudit objet ou de ladite scène en trois dimensions.

En effet, ces paramètres permettent au dispositif de codage et/ou à un serveur d'identifier, au sein du maillage, les facettes appartenant à la pyramide de vue de l'observateur, ou à une pyramide plus large, dite d'anticipation, et donc de déterminer les coefficients d'ondelettes visuellement pertinents.

L'invention concerne encore un système de codage/décodage d'un maillage représentatif d'un objet ou d'une scène en trois dimensions, comprenant au moins un dispositif de codage et au moins un dispositif de décodage tels que décrits précédemment.

Un tel système de codage/décodage peut, par exemple, mettre en oeuvre la télédiffusion de scènes 3D par un serveur, au travers d'un réseau de communication, et permettre une navigation progressive, interactive et adaptative au sein de la scène 3D par un utilisateur d'un terminal de visualisation.

Selon une première technique avantageuse, un tel système de codage/décodage comprend des premiers moyens de transmission d'au moins une information relative à des coefficients d'ondelettes stockés dans une mémoire cache dudit dispositif de décodage, vers ledit dispositif de codage.

Une telle information, couplée au tri des coefficients d'ondelettes, par ordre croissant des facettes du maillage d'une part, et par amplitude d'autre part, permet ainsi au dispositif de codage de connaître les coefficients d'ondelettes présents dans la mémoire cache du dispositif de décodage ou du terminal de visualisation. Seuls les coefficients d'ondelettes nécessaires à la représentation de la scène 3D et non stockés dans la mémoire cache sont ainsi transmis par le dispositif de codage, ce qui évite une transmission d'informations redondante.

Selon une deuxième technique avantageuse, un tel système de codage/décodage comprend des seconds moyens de transmission, vers ledit dispositif de codage, d'au moins une information relative à la capacité de traitement dudit dispositif de décodage, de manière à déterminer un indicateur de capacité dudit dispositif de décodage.

EP 1 340 195 B1

Le dispositif de codage peut ainsi déterminer, en fonction de la capacité du dispositif de décodage ou du terminal de visualisation, quels sont les coefficients d'ondelettes à supprimer.

L'invention concerne aussi l'application du procédé de codage décrit ci-dessus à l'un au moins des domaines appartenant au groupe comprenant :

- affichage d'objets maillés en trois dimensions sur un écran ;
- affichage progressif d'objets maillés en trois dimensions sur un écran, lesdits coefficients d'ondelette étant pris en compte au fur et à mesure de leur arrivée ;
- affichage d'objets maillés en trois dimensions sur un écran à au moins deux niveaux de détail correspondant à un des maillages successifs ($M_j$) ;
- affichage d'objets maillés en trois dimensions sur un écran à au moins deux niveaux de détail correspondant à une reconstruction partielle dudit maillage source (M) avec un nombre restreint de coefficient d'ondelette ;
- transmission progressive par un réseau de communication d'objets maillés en trois dimensions ;
- transmission adaptative par un réseau de communication d'objets maillés en trois dimensions ;
- mise à jour adaptative d'objets maillés en trois dimensions à travers un réseau de communication depuis un serveur distant.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique des différentes étapes mises en oeuvre selon l'invention lors de la suppression d'un coefficient d'ondelette non essentiel ;
- la figure 2 illustre l'évolution des subdivisions du maillage nécessaires à la représentation d'une scène 3D, et la nécessité qui en résulte de supprimer certains coefficients d'ondelettes, ainsi qu'illustré en figure 1 ;
- la figure 3 présente le tableau d'entiers VPC répertoriant les sommets indexant les coefficients d'ondelettes ;
- la figure 4 illustre l'étape d'aplatissement du maillage résultant de la suppression d'un coefficient d'ondelette présentée en figure 1 ;
- la figure 5 décrit l'étape d'élagage de l'arbre représentant le maillage hiérarchique, présentée en figure 1 ;
- la figure 6 illustre les étapes mises en oeuvre lors d'un exemple d'application de l'invention à la télédiffusion de scènes ou d'objets 3D à travers un réseau de télécommunication ;
- la figure 7 présente les différentes opérations effectuées par un serveur du réseau de télécommunication dans l'exemple de réalisation particulier de la figure 6.

Le principe général de l'invention repose sur la suppression de coefficients d'ondelettes associés à des parties d'une scène ou d'un objet 3D non visuellement pertinentes, de manière à permettre une visualisation adaptative dudit objet ou de ladite scène.

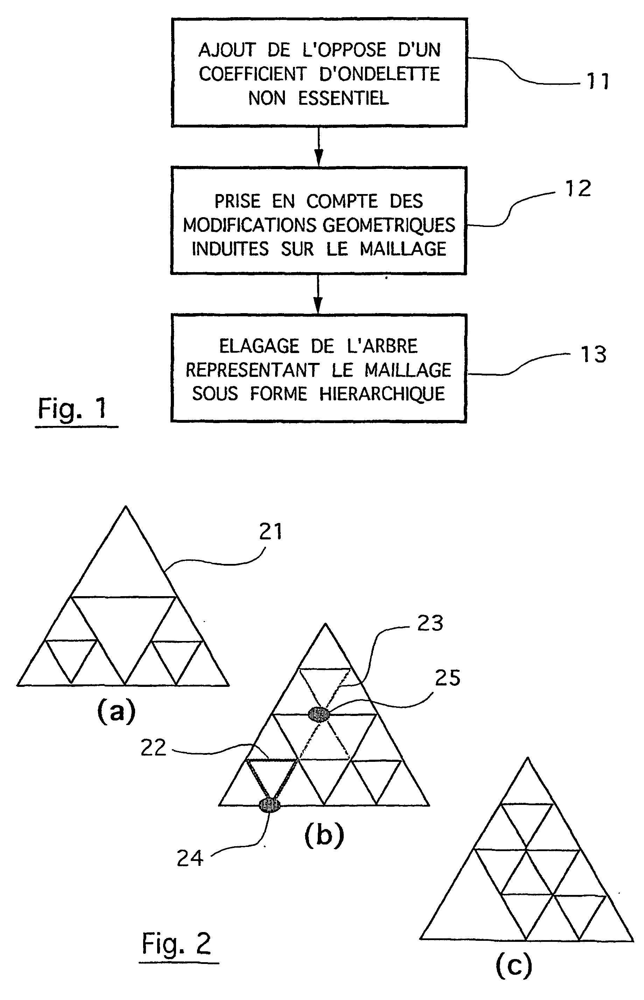

On présente, en relation avec la figure 1, un mode de réalisation d'une telle suppression d'un coefficient d'ondelette associé à une partie non visible du maillage représentatif d'un objet ou d'une scène en 3D.

On rappelle tout d'abord que l'invention met en oeuvre plusieurs structures de données et algorithmes permettant de supprimer des coefficients d'ondelettes non visuellement pertinents, sans qu'il soit nécessaire de reconstruire l'ensemble du maillage associé.

Ces structures de données, intervenant dans la représentation progressive du maillage à visualiser, sont les suivantes :

- une première structure de données associée à une face du maillage ;
- une deuxième structure de données associée à un sommet du maillage ;
- une troisième structure de données associée au maillage lui-même. Une face du maillage est caractérisée par quatre champs :

- un niveau, qui est un entier correspondant au niveau de subdivision de la face ;
- un tableau fils à quatre éléments, dont chaque élément est un pointeur sur une face ;
- un tableau sommetCoin à trois éléments, dont les éléments sont des pointeurs sur les sommets de la face ;
- un tableau sommetArete à trois éléments, dont les éléments sont des pointeurs sur les sommets milieux des arêtes de la face, si ceux-ci existent.

Un sommet est caractérisé par cinq champs :

- un tableau parentV à deux éléments, dont chaque élément est un pointeur sur un sommet, de telle sorte que le sommet soit situé géométriquement entre ces deux éléments ;
- un tableau parentF à deux éléments, dont chaque élément est un pointeur sur une face, de telle sorte que le sommet soit situé sur le milieu d'une arête partagée par ces deux éléments ;
- un triplet de réels flottants fGeom ;
- un triplet de réels g ;
- un tableau hGeom comportant autant d'éléments que de niveaux de subdivision, chaque élément étant un coefficient de fonction chapeau (On rappelle qu'une fonction chapeau est une fonction d'échelle, affine par morceaux, valant 1 pour un sommet d'un maillage $M_j$ et valant 0 pour tous les autres sommets de ce maillage. Pour plus d'informations sur les fonctions chapeaux, on pourra notamment se référer à l'article «Interactive Multiresolution Surface Viewing » (Computer Graphics Proceedings 1996) de A. Certain, J. Popovic, T. DeRose, D. Salesin et W. Stuetzle).

Un maillage est décrit de deux façons au niveau d'un terminal de visualisation ou d'un dispositif de décodage :

- sous une forme séquentielle, comme une liste de facettes. Cette liste sera désignée dans la suite de ce document par le terme "liste d'affichage" ;
- sous une forme hiérarchique, comme une forêt de 4-arbres, chacune des racines étant en correspondance biunivoque avec une face du maillage source $M_0$, et le fils de chaque noeud correspondant à un degré de subdivision du maillage source. Cette forêt sera notée dans la suite Q. Cette forêt comporte un champ vertexTable qui est un tableau de sommets.

On rappelle désormais le principe de la visualisation progressive d'une représentation d'un objet ou d'une scène tridimensionnels. Soit $M$ un maillage à transmettre sous forme de coefficients d'ondelettes à un terminal de visualisation. Supposons qu'à un instant $t$ un ensemble $E_t$ de coefficients soient transmis. On appellera paramétrisation temporaire à l'instant t la paramétrisation :

$$\sum_{c_k^j \in E_t} c_k^j \phi_k^j,$$

et on appellera maillage temporaire à l'instant t le maillage

$$\phi(M_j),$$

selon la définition donnée par Certain et al. dans "Interactive Multiresolution Surface Viewing", Computer Graphics Proceedings, Annual Conference Series, 1996.

Selon l'invention, la visualisation adaptative d'un objet ou d'une scène 3D consiste à réaliser une partition de l'ensemble $E_t$ à un instant t en deux sous-ensembles $P_t$ et $I_t$, $P_t$ représentant l'ensemble des coefficients d'ondelettes pertinents et $I_t$ l'ensemble des coefficients d'ondelettes utiles, avec

$$P_t \cap I_t = \varnothing$$

et

$$P_t \cup I_t = E_t.$$

Cette partition dépend des paramètres de vue, c'est-à-dire de la position d'un observateur et de sa direction de vue : à deux instants $t_0$ et $t_1$, on peut avoir $E_{t0} = E_{t1}$ mais $P_{t0}$ différent de $P_{t1}$.

Dans la suite du document, le terme "mise à jour des coefficients" désignera l'ensemble des processus qui permettent de passer d'un état $E$ composé d'un ensemble $E_t$, d'une partition $P_t$ et $I_t$, et d'un maillage temporaire correspondant,

$$\sum_{c_k^j \in P_t} c_k^j \phi_k^j \, ,$$

à un état courant $E_c$ composé d'un ensemble $E_{t0}$, d'une partition $P_{t0}$ et $I_{t0}$, et d'un maillage temporaire correspondant,

$$\sum_{c_k^j \in P_{t0}} c_k^j \phi_k^j \, .$$

Le terme "prise en compte de coefficients" ou "ajout de coefficients" désignera, dans la suite du document, l'ensemble des processus permettant de passer d'un maillage temporaire défini par $E$ à un autre maillage temporaire défini par $E_t$, tels que $P_t$ et $P_{t0}$ ne diffèrent que d'un coefficient, appelé "coefficient ajouté". Le terme "suppression de coefficients" désignera l'ensemble des processus permettant de passer d'un premier maillage temporaire à un second maillage temporaire, tels que $P_t$ et $P_{t0}$ ne diffèrent que d'un coefficient, appelé "coefficient supprimé".

Les techniques de l'art antérieur permettent une visualisation progressive du maillage M. Selon une approche nouvelle et inventive, l'invention permet, à partir des mêmes structures de données, une visualisation adaptative du même maillage M, par l'utilisation d'algorithmes de suppression de coefficients d'ondelettes en un temps court, sensiblement du même ordre de grandeur que le temps nécessaire à l'ajout d'un coefficient d'ondelette selon les techniques de l'art antérieur.

Selon une technique classique, l'ajout d'un coefficient d'ondelette consiste à subdiviser le maillage temporaire $M_t$ jusqu'à ce que la fonction chapeau correspondant au coefficient ajouté soit affine sur chaque face du maillage $M_t$, puis à placer le coefficient dans le champ hGeom du sommet indexé par ledit coefficient. Ce processus est itéré pour chaque coefficient et, lors de la prise en compte visuelle de ces coefficients, les éléments de hGeom de chaque sommet du maillage temporaire sont additionnés et ajoutés aux diverses contributions des parents successifs de ces sommets, de façon à obtenir, dans le champ g de chaque sommet, la nouvelle position dudit sommet.

L'invention permet le retrait de coefficients d'ondelettes en s'appuyant sur les structures de données décrites ci-dessus, selon les étapes illustrées en figure 1 :

- au cours d'une étape référencée 11, on ajoute l'opposé du coefficient d'ondelette à supprimer à la fonction de paramétrisation du maillage. Une telle étape peut être mise en oeuvre selon l'algorithme suivant :

```
procedure ajouteOpposé(coeff :entier)
    pour i de 1 à 3
        vertexTable[VPC[coeff]][i]-=coeffTable[coeff][i]
fin ;
```

- au cours d'une étape référencée 12, on prend en compte en cascade les modifications géométriques résultant de l'étape référencée 11. À l'issue de cette étape, chaque sommet du maillage temporaire comporte dans son champ fGeom la valeur de :

$$\sum_{c_k^j \in P_t} c_k^j \phi_k^j \; ;$$

- au cours d'une étape référencée 13, on met en oeuvre les deux algorithmes ci-dessous, de manière à réaliser l'élagage de l'arbre représentant le maillage sous forme hiérarchique :

```
procedure élague(Q : forêt)
        pour chaque racine r de Q
                aplatis(r)
        fin
```

et

```
procedure aplatis(r : arbre)
        si r n'est pas une feuille faire
                pour chaque fils s de r
                        aplatis(s)
        fin si
        si estPlat(f) faire
                pour chaque fils g de f faire
                        ôter g de la liste d'affichage
                        libérer g
                fin pour
                ajouter f à la liste d'affichage
fin.
```

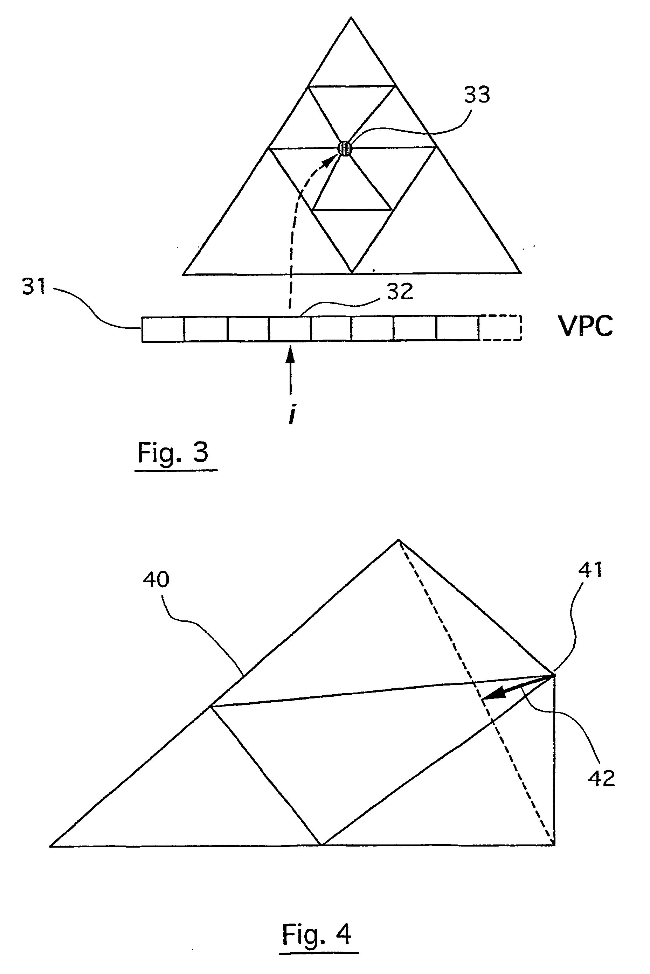

Au cours de l'étape référencée 11, l'ajout de l'opposé du coefficient d'ondelette se fait donc en introduisant une structure supplémentaire VPC, illustré en figure 3. Une telle structure est un tableau 31 dont le $i^{ème}$ élément 32 est l'indice du sommet 33 indexé par le $i^{ème}$ coefficient 32, si un tel sommet 33 existe. L'accès au champ hGeom de ce sommet 33 est donc immédiat.

La suppression d'un ou plusieurs coefficients d'ondelettes au cours de l'étape référencée 11 est rendue nécessaire par l'évolution des subdivisions du maillage, comme illustré en figure 2.

En effet, à un instant t donné, une face 21 du maillage de base présente les subdivisions de la figure 2a. L'évolution temporelle de la scène 3D à laquelle est associée le maillage considéré entraîne l'évolution du maillage, ainsi qu'illustré en figure 2b.

Les traits gras 22 représentent les subdivisions du maillage devenues inutiles, et les traits pointillés 23 représentent les subdivisions devenues nécessaires. Il devient donc utile de supprimer le sommet 24, et donc le coefficient d'ondelette associé. De même, il est nécessaire d'introduire le sommet 25 dans le maillage, et donc d'ajouter le coefficient d'ondelette qui lui est associé.

La figure 2c présente la nouvelle subdivision de la face 21 à l'instant t+1, après qu'aient été prises en compte les modifications géométriques induites par la suppression (respectivement l'ajout) du coefficient d'ondelette associé au sommet 24 (respectivement 25).

Une fois prises en compte toutes les suppressions de coefficients chapeaux au cours de l'étape référencée 11, la prise en compte des modifications géométriques, qui conduit à modifier le champ g des sommets du maillage, est effectuée, au cours de l'étape référencée 12, selon l'algorithme suivant :

```
procedure Evaluation ()
    queue := faces de niveau 0
        tant que nonvide(queue) faire
            faceCourante := premiereFace(queue)
            niveauCourant := faceCourante.level
            si subdivisée(faceCourante) faire
                pour chaque sommetCoin v de faceCourante faire
                    v.g+=v.hGeom[niveauCourant]
                    v.hGeom[niveauCourant] := 0
                fin pour
                pour chaque sommetArete e de faceCourante faire
                    si e a deux faces parentes alors


                        e.g += (e.parentV[1].g + e.parentV[2].g)/4
                    sinon
                        e.g += (e.parentV[1].g + e.parentV[2].g)/2
                    fin si
                fin pour
                pour chaque fils f de faceCourante faire
                    ajouter f à queue
            sinon
                AjouterAListeAffichage(faceCourante)
            fin si
            pour chaque sommet v de fGeom non-nul faire
                v.fGeom += v.g
            v.g := 0
            fin pour
        fin tant que
    fin.
```

Une telle prise en compte des modifications géométriques induites sur le maillage est illustrée en figure 4. On considère le maillage 40. Au cours de l'étape référencée 11, on a supprimé le coefficient d'ondelette indexé par le sommet 41. La prise en compte de cette suppression se traduit par un aplatissement 42 du maillage 40.

Au cours de l'étape référencée 13 de la figure 1, on procède à l'élagage de l'arbre représentant de façon hiérarchique le maillage temporaire reconstruit. L'efficacité des algorithmes décrits ci-dessus, mis en oeuvre au cours de cette étape 13 d'élagage, réside dans l'introduction des structures de données suivantes :

- le tableau 31 d'entiers VPC, illustré en figure 3, tel que si i est l'indice d'un coefficient d'ondelette, VPC[i] est le sommet indexant ce coefficient ;
- une pile d'entiers Gap telle que si un entier i est dans la pile Gap, la liste d'affichage contient en position i une facette non-affichée.

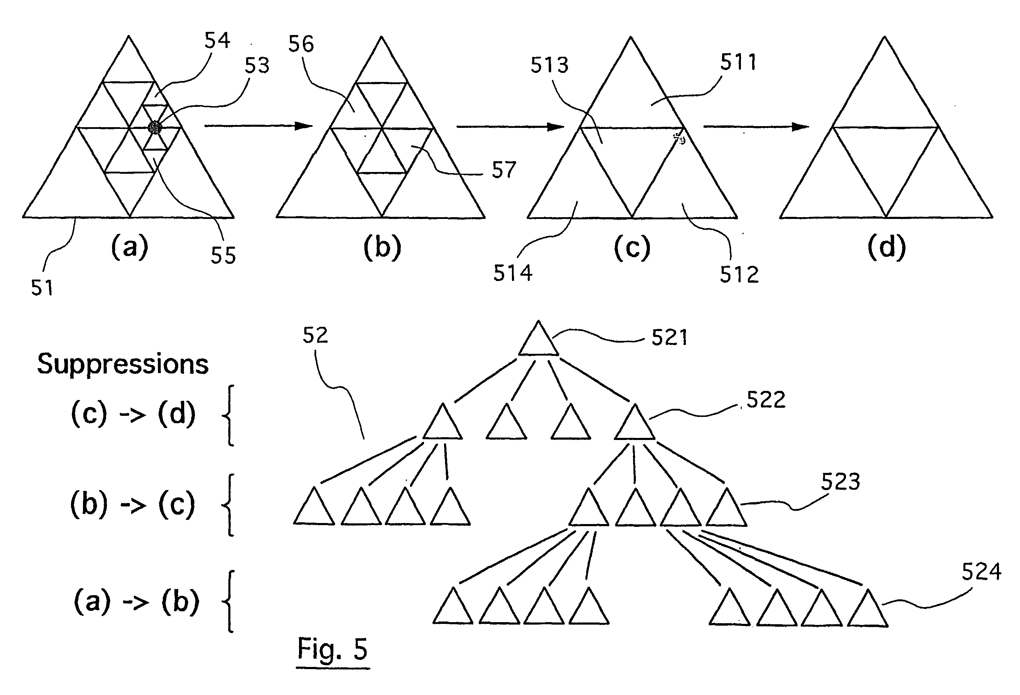

Une telle étape 13 d'élagage de l'arbre est détaillée en figure 5. Une face 51 du maillage considéré est associée à l'arbre hiérarchique 52. Le sommet 53 représenté en figure 5a indexe le coefficient d'ondelette que l'on souhaite supprimer.

On passe de la figure 5a à la figure 5b en supprimant le coefficient d'ondelette associé au sommet 53, et donc les subdivisions correspondantes des facettes 54 et 55. De telles facettes 54 et 55 sont contiguës, et le sommet 53 constitue le milieu de leur arête commune. Le passage de la figure 5a à la figure 5b correspond à la suppression du niveau 524 de l'arbre hiérarchique 52.

On passe ensuite de la figure 5b à la figure 5c en supprimant les subdivisions des facettes contiguës 56 et 57 de la face 51, c'est-à-dire en supprimant les noeuds correspondant du niveau 523 de l'arbre hiérarchique 52.

Le niveau 521 de l'arbre 52 correspond à la face référencée 51 du maillage. Les quatre fils du noeud 521, situés sur le niveau 522 de l'arbre hiérarchique, correspondent aux facettes 511, 512, 513 et 514 composant la face 51.

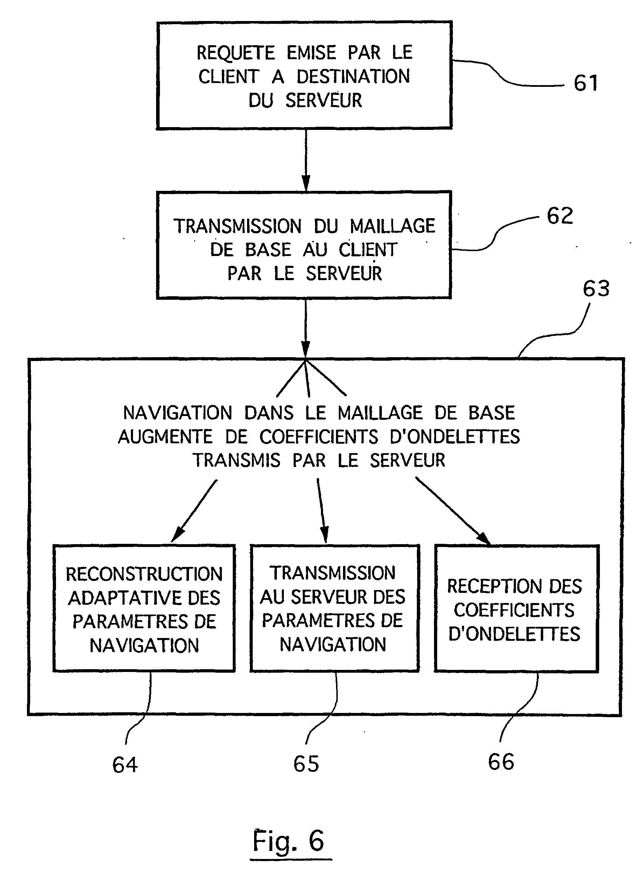

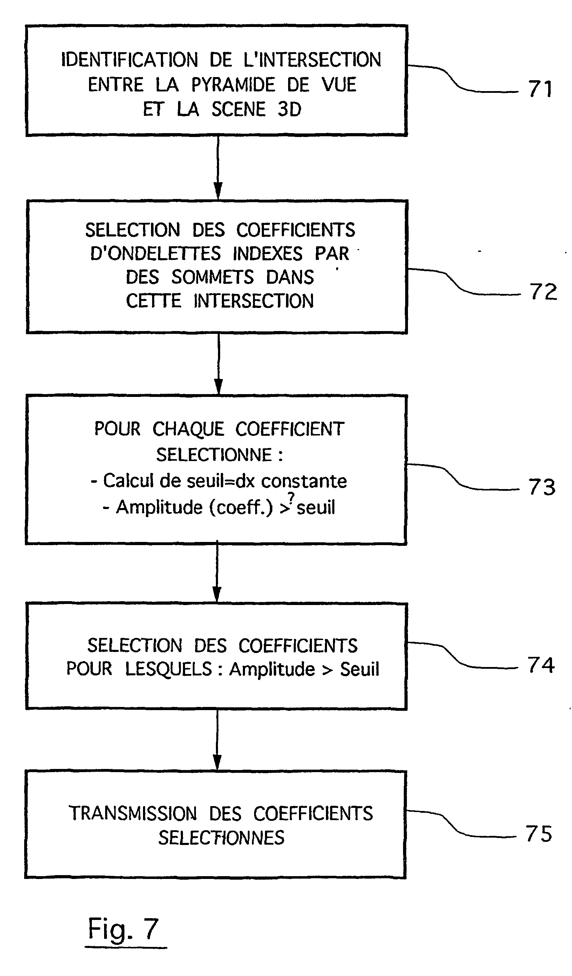

La reconstruction adaptative d'une scène ou d'un objet 3D basée sur des ondelettes, à partir des méthodes et des algorithmes décrits ci-dessus, trouve notamment, mais non exclusivement, des applications dans le domaine de la télédiffusion de scènes 3D, par un serveur, au travers d'un réseau de télécommunication. Un tel réseau de télécommunication peut être un réseau à débit non-garanti. On décrit dans la suite, en relation avec les figures 6 et 7, un exemple de réalisation particulier d'une télédiffusion de scènes 3D à travers un réseau de télécommunication.

Au cours d'une étape référencée 61, un client émet une requête à destination d'un serveur, par l'intermédiaire d'un réseau de télécommunication, de façon à pouvoir naviguer de manière progressive, interactive, et adaptative au sein d'une scène ou d'un objet 3D.

Le serveur traite la requête 61 du client, et lui transmet (62) en réponse le maillage de base associé à la scène ou à l'objet 3D requis. Une telle étape 62 est généralement très rapide puisque le maillage de base, ou maillage simple $M_0$ comporte un nombre réduit de facettes. Classiquement, le nombre de facettes du maillage $M_0$ est inférieur à 1000.

Au cours d'une étape référencée 63, le client peut entreprendre, à l'aide d'un terminal de visualisation, une navigation au sein du maillage de base $M_0$ augmenté de coefficients d'ondelettes transmis par le serveur. Ainsi, la navigation commence dès réception complète des coefficients d'échelle, et un modèle temporaire affiché de la scène 3D est mis à jour au fur et à mesure de l'arrivée des coefficients d'ondelettes.

Au cours d'une telle étape 63, trois processus indépendants peuvent être mis en oeuvre en parallèle sur le terminal de visualisation :

- la reconstruction adaptative 64, en fonction des coefficients d'ondelettes présents dans une mémoire cache du terminal de visualisation, de la position de l'observateur et de ses paramètres de vue, à savoir sa direction et son angle de vue ;
- la transmission régulière 65 au serveur de la position de l'observateur et de ses paramètres de vue ;
- la réception des coefficients d'ondelettes nécessaires à la visualisation adaptative de la scène 3D, en provenance du serveur, et la réorganisation conséquente de la mémoire cache du terminal de visualisation.

En effet, les coefficients d'ondelettes sont stockés dans une mémoire cache du terminal du client, et régulièrement, le maillage temporaire est mis à jour en utilisant le sous-ensemble des coefficients d'ondelettes stockés, représentant les coefficients visuellement pertinents, qui sont identifiés d'après les paramètres de navigation tels que la position de l'observateur et sa direction de vue.

À chaque fois que l'observateur virtuel de l'objet ou de la scène 3D parcourt une distance delta prédéterminée, une nouvelle partition de l'ensemble des coefficients d'ondelettes présents dans la mémoire cache est effectuée. Deux listes sont alors dressées : une liste de coefficients à ajouter à la représentation temporaire, et une liste de coefficients à supprimer de cette représentation.

Les coefficients d'ondelettes à supprimer sont traités un par un selon le processus décrit précédemment et illustré en figure 1 :

- on ajoute l'opposé de chacun des coefficients d'ondelettes à supprimer au cours d'une étape référencée 11 ;

- on procède à la prise en compte géométrique en cascade des suppressions de coefficients d'ondelettes au cours d'une étape référencée 12 selon un algorithme adapté présenté ci-dessus ;
- on élague l'arbre de la représentation du maillage, au cours d'une étape référencée 13, selon un algorithme adapté présenté précédemment dans le document.

Le contrôle est alors rendu au client, qui peut visualiser le maillage associé à la scène 3D, en déplaçant l'observateur virtuel et en modifiant sa direction et son angle de vue. Le processus est réitéré dès que la distance parcourue par l'observateur virtuel est égale à delta.

La mise en oeuvre de l'étape référencée 63 de la figure 6 nécessite, du côté du serveur, la réalisation d'un nombre de tâches égales au nombre de clients ayant émis une requête 61, de telles tâches consistant à sélectionner, pour chaque client ayant transmis (65) ses paramètres de navigation, la liste des coefficients d'ondelettes jugés visuellement pertinents, et à les envoyer (66) à travers le réseau de communication.

La pertinence visuelle d'un coefficient d'ondelette est déterminée par le serveur selon le procédé illustré en figure 7.

Au cours d'une étape référencée 71, le serveur identifie l'intersection entre la pyramide de vue de l'observateur (ou une pyramide plus large, dite d'anticipation) et la scène 3D ayant fait l'objet de la requête 61.

Le serveur sélectionne ensuite (72) les coefficients d'ondelettes indexés par des sommets dans l'intersection identifiée.

Au cours d'une étape référencée 73, le serveur évalue, pour chaque coefficient d'ondelette sélectionné, le produit d'un indicateur de capacité du terminal par la distance de l'observateur au sommet indexant le coefficient. Ce produit constitue un seuil, auquel le serveur compare l'amplitude du coefficient d'ondelette.

Un tel indicateur peut être une constante, fixée a priori, en fonction de la capacité de traitement du terminal de visualisation de l'observateur. Par exemple, une telle constante est déterminée, préalablement au début de la navigation, en fonction du type de processeur dont dispose le terminal de visualisation de l'observateur.

Un tel indicateur peut encore varier en cours de navigation, en fonction de la capacité de traitement courante du terminal de visualisation. On peut ainsi envisager de mettre en oeuvre, au début de la navigation, une étape d'adaptation de la valeur de l'indicateur en fonction du nombre d'images par seconde que l'on souhaite pouvoir visualiser sur le terminal. La valeur de l'indicateur peut ensuite être mise à jour, en cours de navigation, en fonction des ressources du terminal consommées par d'autres applications ou d'autres processus qu'il traite simultanément, de manière à maintenir la consigne relative au nombre d'images visualisées par seconde (en anglais "frame rate") fixée initialement.

Les informations relatives à la capacité de traitement du terminal de visualisation sont envoyées au serveur par le terminal de visualisation.

À l'issue de l'étape référencée 73, le serveur ne conserve (74) que les coefficients d'ondelettes dont l'amplitude est supérieure au seuil calculé, puis les transmet (75) au client, par l'intermédiaire du réseau de communication.

Selon une variante de réalisation, le serveur émet, préalablement à l'étape de transmission 75, une requête destinée à la mémoire cache du terminal du client, de manière à connaître les coefficients d'ondelette qui s'y trouvent déjà, de façon à éviter tout transfert inutile de coefficients. Le terminal du client renvoie alors au serveur un tableau d'entiers à une colonne, précisant, pour chacune des faces du maillage, le nombre de coefficients d'ondelettes associés à cette face, présents dans la mémoire cache du terminal.

Les coefficients d'ondelettes peuvent être triés de manière efficace par le serveur ou par des moyens de tri extérieurs mis en oeuvre par un autre terminal avec lequel le serveur coopère, grâce à une organisation rationnelle d'une base de données regroupant l'ensemble des coefficients d'ondelettes. Par exemple, les moyens de tri (internes et/ou extérieurs au serveur) reposent sur une organisation par ordre croissant d'identification des facettes du maillage de base $M_0$, et, pour chacune de ces facettes, par un tri en amplitude des coefficients d'ondelettes indexés par des sommets de la facette considérée.

De cette façon, lorsque le dispositif en charge du tri des coefficients a déterminé qu'une face F du maillage simple $M_0$ est située dans la pyramide de vue de l'observateur (ou dans une pyramide plus large, dite d'anticipation), il lui suffit de parcourir la liste des coefficients d'ondelettes de la face F, jusqu'à ce qu'il atteigne un coefficient d'ondelette dont l'amplitude est inférieure au seuil calculé au cours de l'étape référencée 73.

On peut également envisager une variante de réalisation, selon laquelle le client ayant émis la requête 61 détermine lui-même les coefficients d'ondelettes qui lui sont nécessaires pour visualiser la scène ou l'objet 3D ayant fait l'objet de sa requête. Le client peut alors émettre une seconde requête à destination du serveur, pour demander l'envoi, à travers le réseau de communication, des coefficients d'ondelettes dont il a besoin.

**ANNEXE**

Une surface $S$ dans l'espace peut être représentée comme l'image d'une fonction continue injective définie sur un polyèdre $M_o$ de même type topologique et à valeurs dans $\mathbf{R}^3$. On dit alors que la surface est paramétrée par le polyèdre, et l'on appelle paramétrisation la dite fonction. Cette fonction est un triplet de fonctions à valeurs dans **R**, qui peuvent chacune être développées dans une base de l'espace $C^o(M_o)$des fonctions continues sur le polyèdre à valeurs dans **R**.

Dans le cas des surfaces maillées, on utilise cette technique pour obtenir une représentation compressée du maillage. En outre, l'utilisation d'ondelettes comme fonctions de base permet une représentation progressive, de la forme la plus grossière à la plus détaillée.

Ces fonctions ne sont pas des ondelettes au sens classique, mais satisfont des relations de raffinement généralisant le concept d'analyse multirésolution : notons $M_o$ un polyèdre sur lequel est définie une paramétrisation d'une surface $M$. On considère le sous-espace $S_o$ de $C^\circ(M_o)$ engendré par les fonctions $\phi_i^o$ définies comme suit : $\phi_i$ est affine sur chaque facette, vaut 1 sur le i-ème sommet et 0 sur tous les autres.

On définit de la même façon les sous-espaces $S_j$ engendrés par les fonctions $\phi_i^j$ définies de la même manière mais en remplaçant $M_o$ par le maillage $M_j$ obtenu en subdivisant canoniquement chaque facette de $M_{j-1}$. Les espaces $S_j$ sont de dimension finie, emboîtés, $S_o$ étant le plus petit, et toute fonction continue de $M_o$ dans **R** peut être approchée uniformément par une fonction d'un $S_j$ pour $j$ assez grand.

C'est cette inclusion qui permet le codage progressif : si on note $W_j$ un supplémentaire de $S_j$ dans $S_{j+1}$ et

$$\left\{\psi_i^j\right\}_i$$

(les ondelettes) une base de $W_j$ l'ensemble

$$\left\{\phi_i^o\right\}_i \cup \bigcup_{j \geq o}\left\{\psi_i^j\right\}_i$$

forme une base de $C^o(M_o)$. La fonction $\rho$ paramétrant $M$ s'écrit donc de manière unique

où les $C_i$ et les $d_i^j$ sont dans $\mathbf{R}^3$, et sont appelés coefficients d'ondelettes.

En pratique, les ondelettes sont choisies de telle sorte que leur support permette une détermination des coefficients d'ondelettes en $O(n)$, où $n$ est le nombre de sommets du maillage $M$ : pour $k$ entier fixé, si on note $D_{k,i}$ l'ensemble des indices des sommets d'un maillage $M_j$ qui sont à moins de $k$ arêtes de distance du sommet $i$, l'ondelette $\psi_i^j$ est donnée par

$$\psi_i^j = \phi_i^{j+1} + \sum_{l \in D_{k,j}} \alpha_l \phi_i^j \,,$$

de telle sorte que $\psi_i^j$ soit à support dans $D_{k+1,i}$.

Ainsi, lors de la reconstruction, l'influence d'un coefficient d'ondelette est limitée à un tel voisinage.

**Revendications**

1. Procédé de codage d'un maillage source (M) représentatif d'un objet ou d'une scène en trois dimensions, mettant en oeuvre un maillage simple (M$_0$) présentant un nombre réduit de facettes définies chacune par des sommets et des arêtes, et des coefficients dans une base d'ondelettes, correspondant à des modifications locales dudit maillage simple (M$_0$), et permettant de déterminer à chaque instant une fonction de paramétrisation du maillage,
   **caractérisé en ce qu'**il comprend une étape de suppression de l'effet d'au moins un coefficient d'ondelette (d ; d1, ..., dn) s'il est associé à une facette dudit maillage simple (M$_0$) n'appartenant pas à la partie visible dudit maillage source (M) et/ou si l'amplitude dudit coefficient est inférieure à un seuil, déterminé en fonction de la distance d'un observateur à un sommet indexant ledit coefficient,
   de façon à fournir un maillage partiel (M'), correspondant à une représentation partielle dudit maillage source (M).

2. Procédé de codage selon la revendication 1, **caractérisé en ce qu'**il comprend une étape de calcul dudit seuil, tenant compte de ladite distance et d'un indicateur de capacité d'un terminal de visualisation dudit objet ou de ladite scène en trois dimensions.

3. Procédé de codage selon la revendication 2, **caractérisé en ce que** ledit indicateur de capacité est une constante dépendant de la capacité de traitement dudit terminal.

**4.** Procédé de codage selon la revendication 3, **caractérisé en ce que** ledit indicateur de capacité varie en cours de visualisation dudit objet ou de ladite scène en trois dimensions, en fonction de la capacité de traitement courante dudit terminal.

**5.** Procédé de codage selon l'une quelconque des revendications 1 à 4, **caractérisé en ce qu'**il comprend une étape d'aplatissement du maillage, par ajout à ladite fonction de paramétrisation de l'opposé dudit ou desdits coefficients d'ondelette (d ; d1, ..., dn) à supprimer.

**6.** Procédé de codage selon l'une quelconque des revendications 1 à 5, **caractérisé en ce que** ledit maillage partiel (M') correspond à un ensemble d'arbres, chacun desdits arbres représentant une face dudit maillage simple ($M_0$) et comprenant un ensemble de noeuds représentant chacun une face d'un maillage affiné ($M_j$) de la face considérée dudit maillage simple ($M_0$).

**7.** Procédé de codage selon la revendication 6, **caractérisé en ce qu'**il comprend une étape de retrait d'au moins un coefficient d'ondelette (d ; d1, ..., dn) à supprimer, comprenant les étapes suivantes :

- prise en compte de l'opposé dudit ou desdits coefficients d'ondelette (d ; d1, ..., dn) ;
- prise en compte des modifications induites par l'étape précédente ;
- suppression des parties des arbres définissant ledit maillage partiel (M') et influencées uniquement par ledit ou lesdits coefficients d'ondelette (d ; d1, ..., dn).

**8.** Procédé de codage selon l'une quelconque des revendications 1 à 7, **caractérisé en ce qu'**il met en oeuvre un jeu de pointeurs pointant respectivement sur tous les sommets dudit maillage partiel, de façon à atteindre directement un sommet indexant un coefficient d'ondelette à supprimer.

**9.** Procédé de codage selon la revendication 8, **caractérisé en ce que** lesdits pointeurs sont regroupés dans un tableau d'entiers (VPC).

**10.** Procédé de codage selon l'un quelconque des revendications 7 à 9, **caractérisé en ce que** ladite étape de prise en compte des modifications met en oeuvre un algorithme récursif d'élagage.

**11.** Structure de signal représentatif d'un maillage source (M) représentatif d'un objet ou d'une scène en trois dimensions, codé selon le procédé de l'une quelconque des revendications 1 à 10, **caractérisé en ce qu'**elle comprend :

- un champ de base comprenant des données représentatives d'un maillage simple ($M_0$) présentant un nombre réduit de facettes définies chacune par des sommets et des arêtes ;
- au moins un champ de raffinement comprenant des coefficients dans une base d'ondelettes, correspondant à des modifications locales dudit maillage simple ($M_0$), et permettant de déterminer à

chaque instant une fonction de paramétrisation du maillage ; ledit coefficient d'ondelette (d ; d1, ..., dn) dont l'effet a été supprimé selon la dernière étape du procédé de la revendication 1 n'étant pas pris en compte dans ledit signal.

**12.** Dispositif de codage d'un maillage source (M) représentatif d'un objet ou d'une scène en trois dimensions, comprenant des moyens de détermination d'un maillage simple ($M_0$) présentant un nombre réduit de facettes définies chacune par des sommets et des arêtes, et de coefficients dans une base d'ondelettes, correspondant à des modifications locales dudit maillage simple ($M_0$), et permettant de déterminer à chaque instant une fonction de paramétrisation du maillage,
**caractérisé en ce qu'**il comprend des moyens de suppression de l'effet d'un coefficient d'ondelette (d ; d1, ..., dn) associé à une facette dudit maillage simple ($M_0$) n'appartenant pas à la partie visible dudit maillage source (M) et/ou dont l'amplitude est inférieure à un seuil, déterminé en fonction de la distance d'un observateur à un sommet indexant ledit coefficient,
de façon à fournir un maillage partiel (M'), correspondant à une représentation partielle dudit maillage source (M).

**13.** Dispositif de codage selon la revendication 12, **caractérisé en ce qu'**il comprend des moyens de calcul dudit seuil, mettant en oeuvre le produit de ladite distance par un indicateur de capacité d'un terminal de visualisation dudit objet ou de ladite scène en trois dimensions.

**14.** Dispositif de codage selon l'une quelconque des revendications 12 et 13, **caractérisé en ce qu'**il coopère avec des moyens de tri desdits coefficients d'ondelettes en fonction, d'une part, d'une facette dudit maillage simple à laquelle est associé chaque coefficient d'ondelette, et, d'autre part, de l'amplitude desdits coefficients d'ondelettes.

**15.** Dispositif de codage selon l'une quelconque des revendications 12 à 14, **caractérisé en ce qu'**il coopère avec des moyens de transmission de données vers au moins un terminal distant.

**16.** Dispositif de codage selon l'une quelconque des revendications 12 à 15, **caractérisé en ce qu'**il est intégré à un terminal permettant la visualisation dudit objet ou de ladite scène.

**17.** Dispositif de décodage d'un maillage source (M) représentatif d'un objet ou d'une scène en trois dimensions, **caractérisé en ce qu'**il comprend des moyens de réception d'un signal ayant une structure selon la revendication 11, et des moyens de reconstruction d'une représentation dudit objet ou de ladite scène à partir dudit signal reçu.

**18.** Dispositif de décodage selon la revendication 17, **caractérisé en ce qu'**il comprend des moyens de transmission d'au moins une information de position vers un serveur et/ou un dispositif de codage distant.

**19.** Dispositif de décodage selon la revendication 18, **caractérisé en ce que** ladite ou lesdites informations de position appartiennent au groupe comprenant :

- une position d'un observateur dudit objet ou de ladite scène en trois dimensions ;
- une direction de vue d'un observateur dudit objet ou de ladite scène en trois dimensions.

**20.** Système de codage/décodage d'un maillage représentatif d'un objet ou d'une scène en trois dimensions, **caractérisé en ce qu'**il comprend au moins un dispositif de codage selon l'une quelconque des revendications 12 à 16 et au moins un dispositif de décodage selon l'une quelconque des revendications 17 à 19.

**21.** Système de codage/décodage selon la revendication 20, **caractérisé en ce qu'**il comprend des premiers moyens de transmission d'au moins une information relative à des coefficients d'ondelettes stockés dans une mémoire cache dudit dispositif de décodage, vers ledit dispositif de codage.

**22.** Système de codage/décodage selon l'une quelconque des revendications 20 et 21, **caractérisé en ce qu'**il comprend des seconds moyens de transmission, vers ledit dispositif de codage, d'au moins une information relative à la capacité de traitement dudit dispositif de décodage, de manière à déterminer un indicateur de capacité dudit dispositif de décodage.

**23.** Application du procédé de codage selon l'une quelconque des revendications 1 à 10 à au moins un des domaines appartenant au groupe comprenant :

- affichage d'objets maillés en trois dimensions sur un écran ;
- affichage progressif d'objets maillés en trois dimensions sur un écran, lesdits coefficients d'ondelette étant pris en compte au fur et à mesure de leur arrivée ;
- affichage d'objets maillés en trois dimensions sur un écran à au moins deux niveaux de détail correspondant à un des maillages successifs ($M_j$) ;
- affichage d'objets maillés en trois dimensions sur un écran à au moins deux niveaux de détail correspondant à une reconstruction partielle dudit maillage source (M) avec un nombre restreint de coefficient d'ondelette ;
- transmission progressive par un réseau de communication d'objets maillés en trois dimensions ;
- transmission adaptative par un réseau de communication d'objets maillés en trois dimensions ;
- mise à jour adaptative d'objets maillés en trois dimensions à travers un réseau de communication depuis un serveur distant.

**Claims**

**1.** Method of coding a source mesh (M) representing an object or scene in three dimensions, implementing a simple mesh ($M_0$) which presents a reduced number of faces, each defined by vertices and edges, and coefficients in a base of wavelets, corresponding to local modifications of the said simple mesh ($M_0$), and making it possible to determine, at any instant, a mesh parameterisation function,

**characterized in that** it includes a stage of suppressing the effect of at least one wavelet coefficient (d; d1, ..., dn) if it is associated with a face of the said simple mesh ($M_0$) which does not belong to the visible part of the said source mesh (M), and/or if the amplitude of the said coefficient is less than a threshold, determined as a function of the distance from an observer to a vertex which indexes the said coefficient,

in such a way as to supply a partial mesh (M'), corresponding to a partial representation of the said source mesh (M).

2.  Coding method according to Claim 1, **characterized in that** it includes a stage of calculating the said threshold, taking account of the said distance and an indicator of the capacity of a display terminal for the said object or the said scene in three dimensions.

3.  Coding method according to Claim 2, **characterized in that** the said capacity indicator is a constant depending on the processing capacity of the said terminal.

4.  Coding method according to Claim 3, **characterized in that** the said capacity indicator varies in the course of displaying the said object or the said scene in three dimensions, as a function of the present processing capacity of the said terminal.

5.  Coding method according to any one of Claims 1 to 4, **characterized in that** it includes a stage of flattening the mesh, by adding to the said parameterisation function the opposite of the said wavelet coefficient(s) (d; d1, ..., dn) to be deleted.

6.  Coding method according to any one of Claims 1 to 5, **characterized in that** the said partial mesh (M') corresponds to a set of trees, each of the said trees representing one face of the said simple mesh ($M_0$) and comprising a set of nodes, each representing one face of a refined mesh ($M_j$) of the relevant face of the said simple mesh ($M_0$) .

7.  Coding method according to Claim 6, **characterized in that** it includes a stage of withdrawing at least one wavelet coefficient (d; d1, ..., dn) to be deleted, comprising the following stages:

    -   taking account of the opposite of the said wavelet coefficient(s) (d; d1, ..., dn);
    -   taking account of the modifications induced by the previous stage;
    -   deleting the parts of the trees defining the said partial mesh (M') and influenced only by the said wavelet coefficient (s) (d; d1, ..., dn).

8.  Coding method according to any one of Claims 1 to 7, **characterized in that** it implements a set of pointers pointing respectively to all the vertices of the said partial mesh, in such a way as to reach directly a vertex which indexes a wavelet coefficient to be deleted.

9.  Coding method according to Claim 8, **characterized in that** the said pointers are grouped in a table of integers (VPC) .

10. Coding method according to any one of Claims 7 to 9, **characterized in that** the said stage of taking account of modifications implements a recursive pruning algorithm.

11. Signal structure representing a source mesh (M) representing an object or scene in three dimensions, coded according to the method of any one of Claims 1 to 10, **characterized in that** it includes:

    -   a base field comprising data representing a simple mesh ($M_0$) presenting a reduced number of faces, each defined by vertices and edges;
    -   at least one refinement field, comprising coefficients in a wavelet base, corresponding to local modifications of the said simple mesh ($M_0$), and making it possible to determine, at any instant, a parameterisation function of the mesh;

    the said wavelet coefficient (d; d1, ..., dn), the effect of which has been suppressed according to the last stage of the method of Claim 1, not being taken into account in the said signal.

12. Device for coding a source mesh (M) representing an object or scene in three dimensions,

comprising means for determining a simple mesh ($M_0$) which presents a reduced number of faces, each defined by vertices and edges, and coefficients in a base of wavelets, corresponding to local modifications of the said simple mesh ($M_0$), and making it possible to determine, at any instant, a mesh parameterisation function, **characterized in that** it includes means for suppressing the effect of one wavelet coefficient (d; d1, ..., dn) which is associated with a face of the said simple mesh ($M_0$) which does not belong to the visible part of the said source mesh (M), and/or of which the amplitude is less than a threshold, determined as a function of the distance from an observer to a vertex which indexes the said coefficient, in such a way as to supply a partial mesh (M'), corresponding to a partial representation of the said source mesh (M).

**13.** Coding device according to Claim 12, **characterized in that** it includes means for calculating the said threshold, implementing the product of the said distance by an indicator of the capacity of a display terminal for the said object or the said scene in three dimensions.

**14.** Coding device according to any one of Claims 12 and 13, **characterized in that** it co-operates with means for sorting the said wavelet coefficients as a function, on the one hand, of a face of the said simple mesh with which each wavelet coefficient is associated, and, on the other hand, of the amplitude of the said wavelet coefficients.

**15.** Coding device according to any one of Claims 12 to 14, **characterized in that** it co-operates with means for transmitting data to at least one remote terminal.

**16.** Coding device according to any one of Claims 12 to 15, **characterized in that** it is integrated in a terminal which makes it possible to display the said object or the said scene.

**17.** Device for decoding a source mesh (M) representing an object or scene in three dimensions, **characterized in that** it includes means for receiving a signal having a structure according to Claim 11, and means for reconstructing a representation of the said object or the said scene from the said received signal.

**18.** Decoding device according to Claim 17, **characterized in that** it includes means for transmitting at least one item of position information to a server and/or a remote coding device.

**19.** Decoding device according to Claim 18, **characterized in that** the said item(s) of position information belong(s) to the group comprising:

- a position of an observer of the said object or the said scene in three dimensions;
- a viewing direction of an observer of the said object or the said scene in three dimensions.

**20.** System for coding/decoding a mesh representing an object or scene in three dimensions, **characterized in that** it includes at least one coding device according to any one of Claims 12 to 16, and at least one decoding device according to any one of Claims 17 to 19.

**21.** Coding/decoding system according to Claim 20, **characterized in that** it includes first means of transmitting at least one item of information concerning wavelet coefficients which are stored in a cache memory of the said decoding device to the said coding device.

**22.** Coding/decoding system according to any one of Claims 20 and 21, **characterized in that** it includes second means of transmitting to the said coding device at least one item of information concerning the processing capacity of the said decoding device, in such a way as to determine an indicator of the capacity of the said decoding device.

**23.** Application of the coding method according to any one of Claims 1 to 10 to at least one of the fields belonging to the group comprising:

- display of meshed objects in three dimensions on a screen;
- sequential display of meshed objects in three dimensions on a screen, the said wavelet coefficients being taken into account as they arrive;
- display of meshed objects in three dimensions on a screen at at least two levels of detail, corresponding to one of the successive meshes ($M_j$) ;
- display of meshed objects in three dimensions on a screen at at least two levels of detail, corresponding to a partial reconstruction of the said source mesh (M) with a restricted number of wavelet coefficients;

- sequential transmission by a communication network of meshed objects in three dimensions;
- adaptive transmission by a communication network of meshed objects in three dimensions;
- adaptive updating of meshed objects in three dimensions via a communication network from a remote server.

**Patentansprüche**

1. Kodierverfahren eines für einen dreidimensionalen Gegenstand oder für eine dreidimensionale Szene repräsentativen Quellennetzwerkes (M),

   in dem ein einfaches Netzwerk ($M_0$) festgelegt wird, das eine reduzierte Zahl von jeweils durch Knoten und Kanten definierte Flächen aufweist, gefolgt von Koeffizienten in einer Wavelet-Basis, welche örtlichen Änderungen des einfachen Netzwerkes ($M_0$) entsprechen und zu jedem Zeitpunkt das Bestimmen einer Parametrisierungsfunktion des Netzwerkes ermöglicht,

   **dadurch gekennzeichnet, dass** es einen Schritt zum Unterdrücken des Effektes von mindestens einem Wavelet-Koeffizienten (d; d1, ..., dn) umfasst, wenn dieser mit einer Fläche des einfachen Netzwerkes ($M_0$) assoziiert ist, die nicht zum sichtbaren Teil des Quellennetzwerkes (M) gehört und/oder, wenn die Amplitude dieses Koeffizienten kleiner ist als ein Schwellenwert, der als Funktion der Entfernung zwischen einem Beobachter und einem diesen Koeffizienten indizierenden Knoten bestimmt wird,

   so dass ein partielles Netzwerk (M') bereitgestellt wird, das einer partiellen Darstellung des Quellennetzwerkes (M) entspricht.

2. Kodierverfahren nach Anspruch 1, **dadurch gekennzeichnet, dass** es einen Schritt zum Berechnen dieses Schwellenwertes umfasst, wobei der erwähnte Abstand und ein Kapazitätsindikator eines Terminals zum Sichtbarmachen des dreidimensionalen Gegenstandes oder der dreidimensionalen Szene berücksichtigt werden.

3. Kodierverfahren nach Anspruch 2, **dadurch gekennzeichnet, dass** der erwähnte Kapazitätsindikator eine von der Verarbeitungskapazität des besagten Terminals abhängige Konstante ist.

4. Kodierverfahren nach Anspruch 3, **dadurch gekennzeichnet, dass** der erwähnte Kapazitätsindikator während des Sichtbarmachens des dreidimensionalen Gegenstandes oder der dreidimensionalen Szene in Abhängigkeit der laufenden Verarbeitungskapazität des Terminals variiert.

5. Kodierverfahren nach einem der Ansprüche 1 bis 4, **dadurch gekennzeichnet, dass** es einen Schritt zum Abplatten des Netzwerkes durch Hinzufügen des Gegenteils des zu eliminierenden oder der zu eliminierenden Wavelet-Koeffizienten (d; d1, ..., dn) zur erwähnten Parametrisierungsfunktion umfasst.

6. Kodierverfahren nach einem der Ansprüche 1 bis 5, **dadurch gekennzeichnet, dass** das partielle Netzwerk (M') zu einer Menge von Bäumen gehört, wobei jeder dieser Bäume eine Fläche des einfachen Netzwerkes ($M_0$) darstellt und eine Menge von Knoten umfasst, die jeweils eine Fläche eines verfeinerten Netzwerkes ($M_j$) der betrachteten Fläche des einfachen Netzwerkes ($M_0$) darstellt.

7. Kodierverfahren nach Anspruch 6, **dadurch gekennzeichnet, dass** es einen Schritt zum Zurückziehen von mindestens einem der zu eliminierenden Wavelet-Koeffizienten (d; d1, ..., dn) umfasst, der die folgenden Schritte aufweist:

   - Berücksichtigung des Gegenteils des oder der Wavelet-Koeffizienten (d; d1, ..., dn);
   - Berücksichtigung der durch den vorhergehenden Schritt induzierten Änderungen;
   - Unterdrückung der Teile der Bäume, welche das partielle Netzwerk (M') definieren und nur von dem oder den Wavelet-Koeffizienten (d; d1, ..., dn) beeinflusst werden.

8. Kodierverfahren nach einem der Ansprüche 1 bis 7, **dadurch gekennzeichnet, dass** es einen Satz von Zeigern ins Spiel bringt, die jeweils auf alle Knoten des partiellen Netzwerkes zeigen, um einen Knoten, der einen zu eliminierenden Wavelet-Koeffizienten indiziert, direkt zu erreichen.

9. Kodierverfahren nach Anspruch 8, **dadurch gekennzeichnet, dass** die Zeiger in einer Tabelle ganzer Zahlen (VPC) zusammengefügt sind.

10. Kodierverfahren nach einem der Ansprüche 7 bis 9, **dadurch gekennzeichnet, dass** der Schritt zum Berücksichtigen der Änderungen einen rekursiven Lichtungsalgorithmus einsetzt.

11. Struktur eines für ein Quellennetzwerk (M) repräsentativen Signals, wobei dieses Quellennetzwerk für einen dreidimensionalen Gegenstand oder für eine dreidimensionale Szene repräsentativ ist, nach dem Verfahren einer der Ansprüche 1 bis 10 kodiert, **dadurch gekennzeichnet, dass** sie folgendes umfasst:

   - ein Grundfeld, das repräsentative Daten eines einfachen Netzwerkes ($M_0$) umfasst, wobei dieses Netzwerk eine reduzierte Zahl von jeweils durch Knoten und Kanten definierte Flächen aufweist;
   - mindestens ein Verfeinerungsfeld, das Koeffizienten in einer Wavelet-Basis aufweist, die den örtlichen Änderungen des einfachen Netzwerkes ($M_0$) entspricht, wobei dieses Feld das Bestimmen einer Parametrisierungsfunktion des Netzwerkes zu jedem Zeitpunkt ermöglicht;

   wobei der Wavelet-Koeffizient (d; d1, ..., dn), dessen Effekt gemäß dem letzten Schritt des Verfahrens nach Anspruch 1 unterdrückt wurde, im besagten Signal nicht berücksichtigt wird.

12. Kodiervorrichtung eines für einen dreidimensionalen Gegenstand oder für eine dreidimensionale Szene repräsentativen Quellennetzwerkes (M),
   das Mittel zum Bestimmen eines einfachen Netzwerkes ($M_0$), das eine reduzierte Zahl von jeweils durch Knoten und Kanten definierte Flächen aufweist sowie Koeffizienten in einer örtlichen Änderungen des einfachen Netzwerkes ($M_0$) entsprechenden Wavelet-Basis umfasst, wobei diese Mittel zu jedem Zeitpunkt das Bestimmen einer Parametrisierungsfunktion des Netzwerkes ermöglichen,
   **dadurch gekennzeichnet, dass** es Mittel zum Unterdrücken des Effektes eines Wavelet-Koeffizienten (d; d1, ..., dn) umfasst, wenn dieser Koeffizient mit einer Fläche des einfachen Netzwerkes ($M_0$) assoziiert ist, die nicht zum sichtbaren Teil des Quellennetzwerkes (M) gehört und/oder, wenn die Amplitude dieses Koeffizienten kleiner ist als ein Schwellenwert, der als Funktion der Entfernung zwischen einem Beobachter und einem diesen Koeffizienten indizierenden Knoten bestimmt wird,
   so dass ein partielles Netzwerk (M') bereitgestellt wird, das einer partiellen Darstellung des Quellennetzwerkes (M) entspricht.

13. Kodiervorrichtung nach Anspruch 12, **dadurch gekennzeichnet, dass** sie über Mittel zum Berechnen des erwähnten Schwellenwertes verfügt, wobei das Produkt des Abstandes und eines Kapazitätsindikators eines Terminals zum Sichtbarmachen des dreidimensionalen Gegenstandes oder der dreidimensionalen Szene zum Einsatz kommt.

14. Kodiervorrichtung nach einem der Ansprüche 12 oder 13, **dadurch gekennzeichnet, dass** sie mit Mitteln zum Sortieren dieser Wavelet-Koeffizienten zusammenwirkt, als Funktion einerseits einer Fläche des einfachen Netzwerkes mit der jeder Wavelet-Koeffizient assoziiert ist und, andererseits, der Amplitude dieser Wavelet-Koeffizienten.

15. Kodiervorrichtung nach einem der Ansprüche 12 bis 14, **dadurch gekennzeichnet, dass** sie mit Mitteln zum Senden von Daten zu mindestens einem fernen Terminal zusammenwirkt.

16. Kodiervorrichtung nach einem der Ansprüche 12 bis 15, **dadurch gekennzeichnet, dass** sie einem Terminal integriert ist, welches das Sichtbarmachen des Gegenstandes bzw. der Szene ermöglicht.

17. Dekodiervorrichtung eines Quellennetzwerkes (M), welches für einen dreidimensionalen Gegenstand oder für eine dreidimensionale Szene repräsentativ ist,
   **dadurch gekennzeichnet, dass** sie über Mittel zum Empfang eines eine Struktur nach Anspruch 11 aufweisenden Signals sowie über Mittel zum Wiederherstellen einer Darstellung des Gegenstandes bzw. der Szene, ausgehend vom empfangenen Signal, verfügt.

18. Dekodiervorrichtung nach Anspruch 17, **dadurch gekennzeichnet, dass** sie über Mittel zum Senden von mindestens einer Positionsinformation zu einem Server und/oder einer fernen Kodiervorrichtung verfügt.

19. Dekodiervorrichtung nach Anspruch 18, **dadurch gekennzeichnet, dass** die Positionsinformation oder die Positionsinformationen der folgendes umfassenden Gruppe angehört bzw. angehören:

   - einer Position eines Beobachters des dreidimensionalen Gegenstandes oder der dreidimensionalen Szene;

- einer Betrachtungsrichtung eines Beobachters dieses dreidimensionalen Gegenstandes bzw. dieser dreidimensionalen Szene.

20. Kodier-/Dekodiersystem eines für einen dreidimensionalen Gegenstand oder für eine dreidimensionale Szene repräsentativen Netzwerkes, **dadurch gekennzeichnet, dass** es mindestens über eine Kodiervorrichtung nach einem der Ansprüche 12 bis 16 und mindestens über eine Dekodiervorrichtung nach einem der Ansprüche 17 bis 19 verfügt.

21. Kodier-/Dekodiersystem nach Anspruch 20, **dadurch gekennzeichnet, dass** es über erste Mittel zum Senden von mindestens einer Information bezüglich in einem Cache-Speicher dieser Dekodiervorrichtung gespeicherten Wavelet-Koeffizienten zur Kodiervorrichtung verfügt.

22. Kodier-/Dekodiersystem nach einem der Ansprüche 20 oder 21, **dadurch gekennzeichnet, dass** es über zweite Mittel zum Senden zur Kodiervorrichtung von mindestens einer Information bezüglich der Verarbeitungskapazität der Dekodiervorrichtung verfügt, um einen Kapazitätsindikator der besagten Dekodiervorrichtung zu bestimmen.

23. Anwendung des Kodierverfahrens nach einem der Ansprüche 1 bis 10 auf mindestens einem Gebiet aus der folgendes umfassenden Gruppe:

- Sichtbarmachen von dreidimensional vernetzten Gegenständen auf einem Bildschirm;
- fortschreitendes Sichtbarmachen von dreidimensional vernetzten Gegenständen auf einem Bildschirm, wobei die Wavelet-Koeffizienten gemäß ihrer Ankunftsreihenfolge berücksichtigt werden;
- Sichtbarmachen von dreidimensional vernetzten Gegenständen auf einem Bildschirm mit mindestens zwei Detailebenen, aufeinander folgender Netzwerke ($M_j$) entsprechend;
- Sichtbarmachen von dreidimensional vernetzten Gegenständen auf einem Bildschirm mit mindestens zwei Detailebenen, einer partiellen Wiederherstellung des Quellennetzwerkes (M) mit einer eingeschränkten Zahl von Wavelet-Koeffizienten entsprechend;
- fortschreitendes Senden von dreidimensionalen vernetzten Gegenständen;
- adaptives Senden von dreidimensionalen vernetzten Gegenständen;
- adaptives Aktualisieren von dreidimensionalen vernetzten Gegenständen über ein Kommunikationsnetzwerk, von einem fernen Server.

AJOUT DE L'OPPOSE D'UN
COEFFICIENT D'ONDELETTE
NON ESSENTIEL

— 11

PRISE EN COMPTE DES
MODIFICATIONS GEOMETRIQUES
INDUITES SUR LE MAILLAGE

— 12

ELAGAGE DE L'ARBRE
REPRESENTANT LE MAILLAGE
SOUS FORME HIERARCHIQUE

— 13

Fig. 1

Fig. 2

(a)

(b)

(c)

21

23

25

22

24

33

31

32

VPC

i

Fig. 3

40

41

42

Fig. 4

(a) 51 54 53 55

(b) 56 57

(c) 513 511 514 512

(d)

Suppressions

(c) -> (d)

(b) -> (c)

(a) -> (b)

52 521 522 523 524

Fig. 5

EP 1 340 195 B1

REQUETE EMISE PAR LE CLIENT A DESTINATION DU SERVEUR — 61

TRANSMISSION DU MAILLAGE DE BASE AU CLIENT PAR LE SERVEUR — 62

63

NAVIGATION DANS LE MAILLAGE DE BASE AUGMENTE DE COEFFICIENTS D'ONDELETTES TRANSMIS PAR LE SERVEUR

RECONSTRUCTION ADAPTATIVE DES PARAMETRES DE NAVIGATION

TRANSMISSION AU SERVEUR DES PARAMETRES DE NAVIGATION

RECEPTION DES COEFFICIENTS D'ONDELETTES

64

65

66

Fig. 6

IDENTIFICATION DE L'INTERSECTION
ENTRE LA PYRAMIDE DE VUE
ET LA SCENE 3D — 71

SELECTION DES COEFFICIENTS
D'ONDELETTES INDEXES PAR
DES SOMMETS DANS
CETTE INTERSECTION — 72

POUR CHAQUE COEFFICIENT
SELECTIONNE :
- Calcul de seuil=dx constante
- Amplitude (coeff.) $\overset{?}{>}$ seuil — 73

SELECTION DES COEFFICIENTS
POUR LESQUELS : Amplitude > Seuil — 74

TRANSMISSION DES COEFFICIENTS
SELECTIONNES — 75

Fig. 7